# EUROPÄISCHE PATENTSCHRIFT

(11) **EP 4 429 935 B1**
(45) Veröffentlichungstag und Bekanntmachung des Hinweises auf die Patenterteilung: **23.09.2026**
(21) Anmeldenummer: 22809105.4
(22) Anmeldetag: 25.10.2022
(51) Int. Cl.: B62D 21/03, B62D 21/07, B62D 25/20

(54) **KAROSSERIEROHBAU MIT EINER ANTRIEBSBATTERIE**
BODYSHELL WITH A DRIVE BATTERY
CARROSSERIE BRUTE DOTÉE D'UNE BATTERIE DE TRACTION

(30) Priorität: 09.11.2021 DE 102021005515
(43) Veröffentlichungstag der Anmeldung: 18.09.2024
(73) Patentinhaber: Mercedes-Benz Group AG, 70372 Stuttgart (DE)
(72) Erfinder: REINHARDT, Jürgen, 73207 Plochingen (DE); ZICKWERT, Jan, 65817 Eppstein (DE); KAZMAIER, Hubert, 72827 Wannweil (DE); NEFF, Thomas, 70771 Leinfelden-Echterdingen (DE); BISINGER, Jochen, 73733 Esslingen (DE); RATH, Jan, 71032 Böblingen (DE); HELBER, Jan, 72336 Balingen (DE)
(74) Vertreter: Novagraaf Group
(86) Internationale Anmeldenummer: PCT/EP2022/079786
(87) Internationale Veröffentlichungsnummer: WO 2023/083606

(56) Entgegenhaltungen:
- WO-A1-2020/059249
- WO-A1-2021/066180
- DE-A1- 102013 016 824
- DE-A1- 102018 110 519
- FR-A1- 2 942 762
- US-A1- 2015 107 921
- US-A1- 2018 162 447
- US-A1- 2018 194 212
- US-A1- 2020 164 925
- US-A1- 2021 101 490
- US-A1- 2021 178 883
- US-A1- 2021 253 168
- US-A1- 2022 363 122
- US-B2- 10 207 573
- US-B2- 10 639 981
- US-B2- 10 780 923
- US-B2- 10 899 213

## Beschreibung

Die Erfindung betrifft einen Karosserierohbau eines Personenkraftwagens, gemäß Oberbegriff des Anspruchs 1.

Aus der DE 10 2019 006 812 A1 geht ein Kraftfahrzeugrohbau mit einer durch in Fahrzeuglängsrichtung voneinander beabstandete Querträger des Kraftfahrzeugrohbaus und durch in Fahrzeugquerrichtung voneinander beabstandete Längsträger des Kraftfahrzeugrohbaus gebildeten, umlaufend geschlossenen Rahmenstruktur hervor, durch welche ein Aufnahmeraum zum Aufnehmen eines elektrischen Energiespeichers begrenzt ist. Im Vorbau des Kraftfahrzeugs sind Längsträger einer Hauptlängsträgerebene vorgesehen, an deren vorderen Endbereich ein Biegequerträger einer Stoßfängereinrichtung angebracht ist und welche an ihrem anderen Endbereich zumindest mittelbar an der Rahmenstruktur angebunden sind. Bei einem Frontalanprall des Kraftfahrzeugs werden die Crashkräfte über die Längsträger in die Rahmenstruktur eingeleitet. Um den Schutz des Energiespeichers gewährleisten zu können, muss daher die Rahmenstruktur entsprechend massiv ausgebildet sein, damit sie sich nicht im kritischen Maße verformt.

Aus der WO 2021 66180 A1 geht ein gattungsgemäßer Karosserierohbau eines Personenkraftwagens hervor.

Der Erfindung liegt daher die Aufgabe zu Grunde, einen Karosserierohbau der hier angesprochenen Art zu schaffen, bei welchem gegenüber dem bekannten Karosserierohbau ein geringeres Gewicht bei gleichbleibend gutem Schutz des Energiespeichers realisierbar ist.

Die Aufgabe wird erfindungsgemäß gelöst durch einen Karosserierohbau mit den Merkmalen des Anspruchs 1. Vorteilhafte Ausgestaltungen der Erfindung sind Gegenstand der Unteransprüche.

Bei einem Personenkraftwagen mit einer auch als Traktionsbatterie, Hochvoltspeicher oder Zyklenbatterie bezeichneten Antriebsbatterie sind in einem Aufnahmeraum für Batteriemodule der Antriebsbatterie mehrere Längsträger und mehrere Querträger angeordnet. Der Aufnahmeraum und somit die darin angeordneten Antriebsbatteriemodule sind vorzugsweise durch einen Batteriedeckel nach außen abgedichtet verschlossen. Die Antriebsbatterie dient einer elektrischen Energieversorgung mindestens einer elektrischen Antriebsmaschine zum Antrieb des Fahrzeugs.

Der Karosserierohbau umfasst in Kraftwagenlängsrichtung voneinander beabstandete Querträger und in Kraftwagenquerrichtung voneinander beabstandete Längsträger, welche eine umlaufend geschlossene Rahmenstruktur ausbilden, durch welche ein Aufnahmeraum zum Aufnehmen der eine Anzahl von Batteriemodule aufweisenden Antriebsbatterie begrenzt ist. Der Rohbau weist weiterhin sich in Kraftwagenlängsrichtung an die Rahmenstruktur anschließende Längsträger auf, welche sich in den Vorbau hinein erstrecken und/oder aber in den Heckwagen.

Im Aufnahmeraum für die Batteriemodule sind mehrere Längsträger und mehrere Querträger angeordnet, wobei diese Längsträger die Querträger des Karosserierohbaus und diese Querträger die Längsträger des Karosserierohbaus miteinander verbinden. Ferner ist vorgesehen, dass die - in Kraftwagenlängsrichtung (x-Richtung) gesehen - sich an die Rahmenstruktur anschließenden Längsträger in ihrem Anbindungsbereich an den jeweiligen Querträger der Rahmenstruktur jeweils zumindest eine Teilüberdeckung mit dem korrespondierenden, innerhalb des Aufnahmeraums angeordneten Längsträger aufweisen, derart, dass bei einem kollisionsbedingten Krafteintrag in zumindest einen der Längsträger sich ein in Kraftwagenquerrichtung versatzfreier Lastpfad (L1, L2) zwischen dem Längsträger und dem direkt dahinter im Aufnahmeraum angeordneten Längsträger ausbildet.

Erfindungsgemäß ist vorgesehen, dass Längsträger der Rahmenstruktur und die jeweiligen, quasi in Verlängerung anschließenden Längsträger der Vorbaustruktur und/oder die Längsträger der Heckwagenstruktur mittels jeweils eines den jeweiligen Querträger oberhalb überbrückenden Verbindungselements direkt miteinander verbunden sind.

Der Karosserierohbau wird auch als Karosserie bezeichnet. Die Längsträger und/oder Querträger im Aufnahmeraum für die Batteriemodule sind insbesondere jeweils aus Metall ausgebildet, insbesondere als Profile. Durch die Längsträger und Querträger wird insbesondere eine Leiterrahmenstruktur im Aufnahmeraum für die Batteriemodule erreicht, welche zudem insbesondere an die Längsträger des Karosserierohbaus angebunden ist.

Die Antriebsbatterie darf aus Sicherheitsgründen, beispielsweise zur Vermeidung einer Selbstentzündung, keine Intrusion bei Standard-Crash-Lastfällen erfahren, beispielsweise bei einem Seitenaufpralltest mit einem Pfahl. Im Stand der Technik wird dies durch weitere Verstärkungen im Karosserierohbau erreicht, die jedoch ein Gewicht des batterieelektrischen Fahrzeugs erhöhen, wodurch Reichweitenpotentiale nicht vollständig genutzt werden können. Dies wird durch die erfindungsgemäße Lösung vermieden.

Die Reichweite elektrischer Fahrzeuge wird im Wesentlichen durch die Effizienz und damit durch den Verbrauch in kWh/100 km und des Weiteren durch eine nutzbare installierte Batteriekapazität bestimmt. Speziell bei relativ großen und schweren Fahrzeugen, beispielsweise SUV, wird deshalb angestrebt, möglichst eine hohe installierte Batteriekapazität im Fahrzeug unterzubringen.

Durch die erfindungsgemäße Lösung wird der nutzbare Batteriebauraum im Personenkraftwagen optimiert, sodass eine hohe elektrische Reichweite unter Einhaltung der Sicherheitsanforderungen möglich wird.

Um ein schweres steifes Batteriegehäuse und zusätzliche Verstärkungen zur Absicherung der Crashperformance im Karosserierohbau des Personenkraftwagens um die Antriebsbatterie herum zu vermeiden, trägt die Batterie, genauer gesagt die erfindungsgemäße Struktur aus Längsträgern und Querträgern im Aufnahmeraum für die Batteriemodule, zur Steifigkeit und Festigkeit des Karosserierohbaus bei. Die Längsträger und Querträger sind in die Antriebsbatterie oder zumindest in deren Aufnahmeraum integriert. Sie leiten den Lastpfad bei einer Front- beziehungsweise Heckkollision oder bei einer Seitenkollision optimal oder zumindest optimiert durch die Antriebsbatterie hindurch, wodurch auftretende Kräfte nicht auf die Batterie einwirken können. Vorteilhafterweise werden durch die beschriebene Lösung knickfreie oder zumindest möglichst knickfreie Lastpfadverläufe erreicht. Die erfindungsgemäße Lösung ermöglicht einen optimierten Kraftfluss entlang der Längsträger und Querträger gemäß der durch deren Anordnung zueinander gegebener beziehungsweise sich einstellender Lastpfadverläufe, welche zumindest die Längsträger im Aufnahmeraum zumindest überwiegend, vorzugsweise vollständig auf Zug- oder Druck entlang deren Längsachse belastet.

Die erfindungsgemäße Lösung ermöglicht beispielsweise auch eine Integration von Sensoren zur Messung mechanischer Spannungen, beispielsweise DMS (Dehnungsmessstreifen), und/oder Temperatursensoren und/oder Gassensoren, insbesondere zur Detektion aus den Einzelzellen der Antriebsbatterie entweichender Gase, in die Längsträger und/oder Querträger im Aufnahmeraum. Dadurch wird ein so genanntes Health-Monitoring, das heißt insbesondere eine Zustandsüberwachung, der Antriebsbatterie ermöglicht. In einer möglichen Ausführungsform ist daher vorgesehen, dass einer oder mehrere Sensoren zur Messung mechanischer Spannungen, beispielsweise DMS, und/oder einer oder mehrere Temperatursensoren und/oder einer oder mehrere Gassensoren jeweils in mindestens einen der Längsträger oder mehrere oder alle Längsträger und/oder in mindestens einen der Querträger oder mehrere oder alle Querträger im Aufnahmeraum für die Batteriemodule integriert sind.

Alternativ oder zusätzlich ermöglicht die erfindungsgemäße Lösung beispielsweise eine Integration einer Kühlfunktion, insbesondere in den Batteriedeckel, welcher insbesondere unterhalb der Antriebsbatterie angeordnet ist. Hierzu ist der Batteriedeckel vorteilhafterweise in Sandwich-Bauweise ausgeführt. In einer möglichen Ausführungsform ist daher vorgesehen, dass die Kühlfunktion in den Batteriedeckel integriert ist, welcher vorteilhafterweise in Sandwich-Bauweise ausgeführt ist.

Im Folgenden werden vorteilhafte Ausführungsbeispiele der Erfindung anhand der Zeichnung näher erläutert. Dabei zeigen:
- Fig. 1: in perspektivischer Darstellung einen Ausschnitt eines ersten Ausführungsbeispiels eines Personenkraftwagens mit einer Antriebsbatterie, und
- Fig. 2: in schematischer Darstellung eine Draufsicht auf den Karosserierohbau eines weiteren Ausführungsbeispiels eines Personenkraftwagens mit einer Antriebsbatterie.

Einander entsprechende Teile sind in allen Figuren mit den gleichen Bezugszeichen versehen.

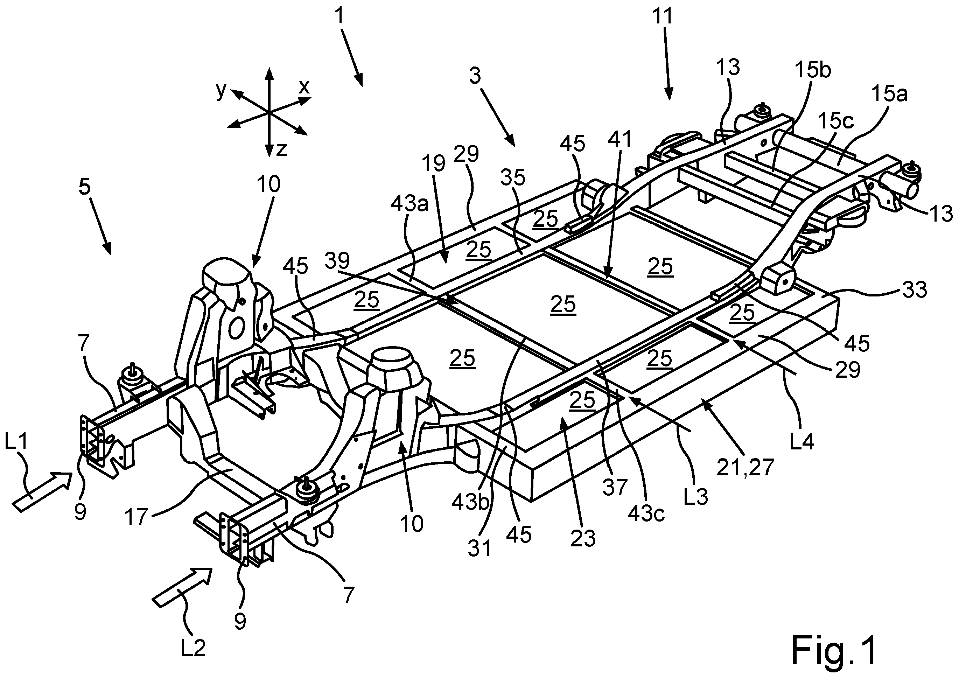

Fig. 1 zeigt in perspektivischer Darstellung einen Ausschnitt eines ersten Ausführungsbeispiels eines erfindungsgemäßen Personenkraftwagens 1. Zu erkennen ist ein Teil eines auch als Tragstruktur oder Karosserie bezeichneten Karosserierohbaus 3 des Personenkraftwagens 1. In einer Vorbaustruktur 5 des Personenkraftwagens 1 sind zwei in Fahrzeugquerrichtung voneinander beabstandete Längsträger 7 einer Hauptlängsträgerebene angeordnet, an deren freien Enden - im fertiggestellten Zustand des Personenkraftwagens 1 - ein hier nicht dargestellter Biegequerträger einer Stoßfängereinrichtung angebracht ist. Hierzu sind an den Längsträgern 7 endseitig, bei dem gezeigten Ausführungsbeispiel Flansche aufweisende Befestigungsstellen 9 vorgesehen. Der Stoßfängerbiegequerträger ist entweder unmittelbar an den Längsträgern 7 angebracht oder aber mittelbar an zwischen den Längsträgern 7 und dem Biegequerträger angeordneten, auch als Crashboxen bekannten Energieabsorptionselementen. An den Längsträgern 7 sind Dämpferbeinkonsolen 10 angebracht. Alternativ können diese auch einstückig mit den Längsträger 7 ausgebildet sein, insbesondere wenn diese als Gußbauteil ausgebildet sind.

Der Personenkraftwagen 1 umfasst weiterhin eine Heckwagenstruktur 11, umfassend Längsträger 13 und diese miteinander verbindende Querträger 15a bis 15c. Ein ähnlicher Querträger 17 verbindet die im Vorderwagenbereich angeordneten Längsträger 7.

Im mittleren Bereich der Karosserie, welcher zwischen der Vorbaustruktur 5 und der Heckwagenstruktur 11 im Bereich einer im fertiggestellten Zustand des Personenkraftwagens 1 vorgesehenen Fahrgastzelle angeordnet ist, befindet sich eine in die Karosserie integrierte Antriebsbatterie 19. Im Zusammenhang mit der vorliegenden Erfindung wird unter einer "Antriebsbatterie" ein elektrischer Energiespeicher verstanden, in dem elektrische Energie beziehungsweise elektrischer Strom gespeichert werden kann. Dabei ist der Energiespeicher ein Traktionsspeicher, das heißt mittels diesem wird wenigstens eine elektrische Maschine zum Antreiben des Personenkraftwagens 1 mit elektrischer Energie versorgt. Um den Personenkraftwagen 1 mittels der elektrischen Maschine elektrisch anzutreiben, wird die elektrische Maschine in einem Motorbetrieb und somit als Elektromotor betrieben.

Bei der Integration einer solchen Antriebsbatterie 19 in das Fahrzeug 1 stellen sich verschiedene Herausforderungen. So werden beispielsweise eine möglichst große installierte Batteriekapazität und ein optimales Verhältnis aus Schutz von Einzelzellen der Antriebsbatterie 19 und einer mittragenden Struktur der Antriebsbatterie 19 angestrebt.

Des Weiteren sollen möglichst keine Doppelstrukturen im Karosserierohbau des Personenkraftwagens 1 und in einem Batteriegehäuse 21 der Antriebsbatterie 19, falls ein solches vorhanden ist, vorliegen. Zudem werden ein Leichtbau im gesamten Personenkraftwagen 1, eine kühlungsoptimale Anordnung der Elektrik und Elektronik und eine Funktionsintegration der Antriebsbatterie 19 in den Karosserierohbau angestrebt.

Die im Folgenden beschriebene Lösung entspricht diesen Herausforderungen. Erfindungsgemäß ist vorgesehen, dass ein Aufnahmeraum 23 für Batteriemodule 25 der Antriebsbatterie 19 eine umfangseitig geschlossene Rahmenstruktur 27 aufweist, umfassend in Kraftwagenquerrichtung (y-Richtung im Kraftwagenkoordinatensystem) in einem Abstand voneinander angeordnete äußere Längsträger 29, welche über einen - in Kraftwagenlängsrichtung (x-Richtung im Kraftwagenkoordinatensystem) gesehen - vorderen Querträger 31 und einen hinteren Querträger 33 miteinander verbunden sind. Die äußeren Längsträger 29 begrenzen nicht nur den Aufnahmeraum 23 nach außen hin, sondern bilden auch gleichzeitig, im Karosseriebau bekannte Seitenschweller oder aber jeweils einen Teil eines solchen Seitenschwellers, welcher mit mindestens einem weiteren Karosserieteil, beispielsweise einer Seitenwand des Karosserieaufbaus, oder einem weiteren Seitenschwellerteil den Seitenschweller bildet. Dabei können der jeweilige Seitenschweller und das Seitenschwellerteil/-element als Strangpressprofilteil oder als Blechschalenprofilteil ausgebildet sein. An die äußeren Längsträger 29 schließt sich dann eine an sich bekannte Seitenwandstruktur des Personenkraftwagens an.

Innerhalb der vorstehend beschriebenen Rahmenstruktur 27 sind weitere Längsträger 35 und 37 vorgesehen; bei dem Ausführungsbeispiel gemäß Figur 1 genau zwei Längsträger, welche in einem Abstand zu den äußeren Längsträgern 29 und auch in einem Abstand zueinander angeordnet sind. Diese Längsträger 35, 37 sind endseitig an den vorderen und den hinteren Querträger 31, 33 der Rahmenstruktur 27 angebunden, das heißt daran befestigt. Ferner sind innerhalb des Aufnahmeraums 23 mehrere Querträger 39, 41 angeordnet, bei dem Ausführungsbeispiel gemäß Figur 1 genau zwei Querträger, welche ebenso wie die Längsträger 35, 37 insbesondere jeweils aus Metall ausgebildet sind. Jeder der in Fahrzeuglängsrichtung in einem Abstand voneinander und jeweils auch in einem Abstand zu dem jeweils benachbart angeordneten Querträger 31, 33 der Rahmenstruktur 27 angeordneten Querträger 39, 41 ist bei diesem Ausführungsbeispiel aus drei Teilelementen zusammengesetzt, wobei ein erstes Querträgerteilelement 43a den äußeren Längsträger 29 und den benachbart angeordneten Längsträger 35, ein zweites Querträgerteilelement 43b die beiden innerhalb des Aufnahmeraums 23 angeordneten inneren Längsträger 35 und 37, sowie ein drittes Querträgerteilelement 43c den inneren Längsträger 37 und den anderen äußeren Längsträger 29 miteinander verbindet. Dabei schließen die Querträgerteilelemente 43a bis 43c jeweils an den Seitenbereichen der jeweiligen Längsträger an. Somit sind in Kraftwagenquerrichtung durchgängige Verbindungen zwischen den äußeren Längsträgern 29 geschaffen, über welche bei einer Seitenkollision sich Lastpfade L3 und L4 von einer Seite des Kraftwagens zur anderen ausbilden. Bei einem alternativen Ausführungsbeispiel können die Querträger 39, 41 oder lediglich einer dieser Querträger durchgängig ausgebildet sein, also endseitig an die äußeren Längsträger 29 zumindest mittelbar angebunden sein. In diesem Fall ist der jeweilige innere Längsträger 35, 37 entsprechend mehrteilig ausgebildet, wobei auch hier die entsprechenden Längsträgerteilelement an die Querträger innenseitig anschließen.

Festzuhalten bleibt, dass zwischen den Längsträgern 29, 35, 37, 29 und den Querträgern 31, 33, 39, 41 gebildeten, hier jeweils rechteckförmigen Räumen innerhalb des Aufnahmeraums 23 jeweils mindestens ein Batteriemodul 25 untergebracht ist. Dadurch, dass die Batteriemodule 25 zwischen den Längsträgern und Querträgern angeordnet sind, werden diese im Crashfall, also wenn im Falle einer Kollision des Personenkraftwagens mit einem Hindernis unfallbedingt Kräfte in den Karosserierohbau eingeleitet werden, mechanisch nicht belastet. Die Lastpfade innerhalb des Aufnahmeraums 23 verlaufen also zwischen den einzelnen Batteriemodulen 25 und nicht durch diese hindurch.

Zu erkennen ist in Figur 1 weiterhin, dass die einzelnen Batteriemodule 25 unterschiedliche Außenabmessungen haben und dass die zu deren Unterbringung vorgesehene Freiräume zwischen den Längsträger- und Querträgerstrukturen des Aufnahmeraums 23 entsprechend groß, hier also unterschiedlich groß sind. Vorzugsweise sind die Batteriemodule 25 und deren Aufnahmeräume so aufeinander abgestimmt, dass das Leistungsvermögen der Antriebsbatterie 19 möglichst groß ist. Hierzu ist vorzugsweise vorgesehen, dass die Batteriemodule 25 den jeweiligen Freiraum der von den Längs- und Querträgern 29, 35, 37, 29 beziehungsweise 31, 39, 41, 33 gebildeten Gitterstruktur möglichst vollständig oder nahezu vollständig ausfüllen.

Der Aufnahmeraum 23 ist nach oben hin, also auf seiner einer Fahrgastzelle zugewandten Seite mittels eines Deckelelements oder eines flächigen Hauptbodenelements (nicht dargestellt) verschlossen, vorzugsweise dichtend verschlossen. Nach unten hin, also in Richtung einer Fahrbahn, ist ebenfalls mindestens ein Deckelelement zum dichtenden Verschließen des Aufnahmeraums 23 und/oder ein Anprallschutzelement zum Schutz der Batterie beim Aufsetzen auf dem Untergrund vorgesehen. Um im fertiggestellten Zustand des Personenkraftwagens 1 die Zugänglichkeit zum Aufnahmeraum 23 gewährleisten zu können, beispielsweise zur Wartung oder dem Austausch einzelner Batteriemodule 25, ist vorzugsweise zumindest eines der Deckelelemente lösbar, insbesondere zerstörungsfrei lösbar am Karosserierohbau 3 befestigt, beispielsweise angeschraubt. Denkbar sind auch in den Deckelelementen vorgesehene Wartungsöffnungen.

Wie aus Figur 1 ohne weiteres ersichtlich, weisen die in der Vorbaustruktur 5 angeordneten Längsträger 7 und die in der Heckwagenstruktur 11 angeordneten Längsträger 13 - in Kraftwagenlängsrichtung (x-Richtung) gesehen - in ihrem Anschlussbereich an den jeweiligen Querträger 31 beziehungsweise 33 der Rahmenstruktur 27 jeweils eine gewisse Überdeckung mit dem innerhalb des Aufnahmeraums 21 angeordneten Längsträger 35 beziehungsweise 37 auf. Diese quasi fluchtende beziehungsweise teilweise fluchtende Anordnung des jeweiligen Längsträgers 7 mit dem dahinter angeordneten Längsträger 36 beziehungsweise 37 und dem sich in Fahrzeuglängsrichtung dahinter anschließenden Längsträger 13, wie gesagt zumindest in ihren gegenseitigen Anschlussbereichen und angrenzenden Verbindungsbereichen ergibt quasi eine Leiterrahmenstruktur, wie man sie ansonsten nur bei Lastkraftwagen kennt, Diese erfindungsgemäße Ausgestaltung des Karosserierohbaus 3 ermöglicht also im Falle einer Frontalkollision oder einem Aufprall auf die Heckwagenstruktur eine durchgängige, optimale Kraftführung durch den Aufnahmeraum 23 an den Batteriemodulen 25 vorbei. Mit anderen Worten, die Batteriemodule 25 befinden sich außerhalb der sich im Kollisionsfall, je nach Größe und Überdeckung der Kollisionspartner bildenden Lastpfade L1, L2 und sind damit vor Beschädigungen besonders gut geschützt Die Querträger 39, 41 bilden bei einem Seitenaufprall Lastpfade L3 und L4 durch den Aufnahmeraum 23 aus, wobei der Lasteintrag in diese Querträger über die äußeren Längsträger 29 erfolgt.

Festzuhalten bleibt, dass die Längsträger 35, 37 im Aufnahmeraum 23 für die Batteriemodule 25 derart angeordnet sind, dass sie an die Längsträger 7 zumindest im vorderen Bereich und bei dem hier in Figur 1 gezeigten Ausführungsbeispiel auch an die Längsträger 13 im hinteren Bereich des Karosserierohbaus 3 anschließen. Mit dieser Anordnung und Ausgestaltung der Längsträger 7, 35, 37, 13 wird eine Fortführung einer Längsträgerstruktur des Karosserierohbaus 3 aus dem Vorderwagen über die Antriebsbatterie 19 hinweg, das heißt an deren Batteriemodulen 25 vorbei, und darüber hinaus erreicht. Auf diese Weise werden bei einer Kollision auf den Karosserierohbau 3 einwirkende Kräfte nicht in die Antriebsbatterie 19 eingeleitet, sondern durch diese hindurchgeleitet, ohne hierbei die Batteriemodule 25 mechanisch zu belasten.

Nach allem wird deutlich, dass die innerhalb des Aufnahmeraums 23 der Rahmenstruktur 27 angeordneten Längsträger 35 und 37 aufgrund der zumindest in ihren Anbindungsbereichen an die Rahmenstruktur 27 in fluchtender Anordnung zu diesen angeordneten Vorbau-Längsträgern 7 und Heckwagen-Längsträger n13 im Kollisionsfall (Frontal- und Heckaufprall) lediglich einer Zug-Druck-Belastung unterworfen werden, das heißt die Lastpfade L1 und L2 sind in Kraftwagenlängsrichtung (x-Richtung) gerade beziehungsweise geradlinig ausgebildet. Eine Biegebeanspruchung der inneren Längsträger und Querträger wird also -vorzugsweise vollständig- vermieden, zumindest auf ein unschädliches Maß reduziert.

In Figur 1 ist weiterhin zu erkennen, dass bei diesem Ausführungsbeispiel die inneren Längsträger 35, 37 und die jeweiligen, quasi in Verlängerung an gegenüberliegenden Endbereichen anschließenden Längsträgerpaare 7, 13 mittels eines den jeweiligen Querträger 31 beziehungsweise 33 oberhalb überbrückenden Verbindungselements 45 auch direkt miteinander verbunden sind. Selbstverständlich werden auch bei dieser Ausführungsform die vorderen Längsträger 7 zusätzlich auch an den vorderen Querträger 31 angebunden, ebenso wie die inneren Längsträger 35, 37. Das gleiche gilt auch für das heckwagenseitige Ende der inneren Längsträger 35, 37, die an den hinteren Querträger 33 angebunden sind, wobei die hinteren Längsträger 13 ebenfalls auch an dem Querträger 33 angebunden sind.

Wie bereits beschriebenen, sind die Batteriemodule 25 sind zwischen den Längsträgern 29, 35, 37, 29 und Querträgern 31, 39,41, 33 im Aufnahmeraum 23 angeordnet und sind auf diese Weise in den Karosserierohbau 3 integriert.

Festzuhalten bleibt noch, dass im fertiggestellten Zustand des Personenkraftwagens die freien Enden der Längsträger 7 der Vorbaustruktur 5 und auch die der Längsträger 13 der Heckwagenstruktur 11, an denen jeweils eine Stoßfänger beziehungsweise ein Biegequerträger einer Stoßfängereinrichtung oder dergleichen angebunden wird, in Kraftwagenhochrichtung (z-Richtung im Kraftwagenkoordinatensystem) auf einem höheren Niveau liegen, das heißt gegenüber der Fahrbahn einen größeren Abstand aufweisen, als die Rahmenstruktur 27 im mittleren Bereich des Karosserierohbaus 3. Um dennoch eine zumindest teilweise Überdeckung dieser Längsträger 7, 13 mit jeweils einem der Längsträger 35, 37 im Aufnahmeraum 23 in deren Anbindungsbereich am beziehungsweise nahe am jeweiligen Querträger 31 beziehungsweise 33 der Rahmenstruktur 27 realisieren zu können, um eine seitenversatz- und damit biegemomentfreie Einleitung von Crashkräften über die Längsträger 7 bis 13 in die Längsträger 35, 37 zu erreichen, sind die hinteren Längsträger 13 in Richtung auf die Rahmenstruktur 27 bogenförmig abfallend ausgebildet, wie aus Figur 1 ohne weiteres ersichtlich, während bei den vorderen Längsträgern 7 deren Anschlussbereich an den Querträger 31 der Rahmenstruktur 27 eine entsprechend große Erstreckung in Kraftwagenhochrichtung aufweist, um den Höhenversatz auszugleichen, oder aber der jeweilige Längsträger 7 ist an die jeweilige Dämpferbeinkonsole 10 angeschlossen und diese weist in ihrem Anbindungsbereich an den Querträger 31 der Rahmenstruktur 27 eine entsprechende Höhenerstreckung auf, so dass diese auch den Querträger 31 angebunden werden kann. Wichtig ist, dass die Längsträger 7 so ausgebildet und innerhalb des Karosserierohbaus 3 so angeordnet sind, dass im Falle eines Frontalanpralls des Personenkraftwagens ein gerader Lastpfad L1 beziehungsweise L2 über den jeweiligen Längsträger 7 direkt, das heißt ohne Versatz in Kraftwagenquerrichtung und vorzugsweise in Kraftwagenhochrichtung, in den jeweiligen inneren Längsträger 35 beziehungsweise 37 sich ausbilden kann. Das gleiche gilt für die heckwagenseitig angeordneten Längsträger 13, welche dann bei einer Heckkollision die Crashkräfte in die in fluchtender Anordnung befindlichen Längsträger 35, 37 im Aufnahmeraum 23 versatzfrei, das heißt geradlinig einleiten. In beiden Fällen, also beim Frontal- und beim Heckanprall bilden sich gerade, in Kraftwagenlängsrichtung verlaufende Lastpfade L1, L2 aus, welche erfindungsgemäß an den Batteriemodulen 25 vorbei verlaufen.

Die Längsträger 35, 37 und Querträger 39, 41 im Aufnahmeraum 23 für Batteriemodule 25 sind beispielsweise als Profile ausgebildet, zum Beispiel mit einem viereckigen, insbesondere quadratischen, Querschnitt oder als I-Profil oder als ein anders ausgebildetes Profil. Die Längsträger 35, 37 weisen beispielsweise jeweils eine Breite von 50 mm auf. Die Querträger 39, 41 weisen beispielsweise jeweils eine Breite von 40 mm bis 60 mm auf, wobei unterschiedliche Breiten vorgesehen sein können. Beispielsweise weisen einer oder mehrere Querträger 39, 41 eine Breite von 40 mm und einer oder mehrere weitere Querträger 39, 41 eine Breite von 60 mm auf. Die Batteriemodule 25 sind beispielsweise jeweils von den Längsträgern 35, 37 und Querträgern 39, 41 im Aufnahmeraum 23 beabstandet angeordnet, zum Beispiel mit einem Abstand von 4 mm. Dadurch wird bei einer kollisionsbedingten Kraftübertragung über die Längsträger 35, 37 und/oder Querträger 39, 41 im Aufnahmeraum 23 eine Einwirkung auf die Batteriemodule 25 vermieden.

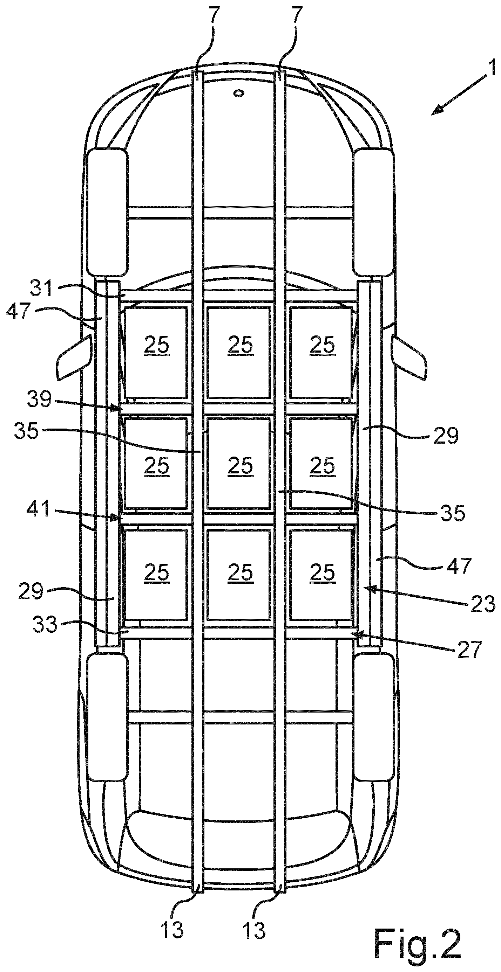

Figur 2 zeigt eine Draufsicht auf ein weiteres Ausführungsbeispiel des erfindungsgemäßen Personenkraftwagens 1 mit einem Karosserierohbau 3, wie er anhand von Figur 1 beschrieben wurde. Im Folgenden wird lediglich auf die Unterschiede näher eingegangen. Die inneren Längsträger 35, 37 sind hier in einem gleichen Abstand zueinander wie auch im gleichen Abstand zu den äußeren Längsträgern 29, welche zumindest einen Teil des jeweiligen Seitenschwellers bilden, angeordnet. Dasselbe gilt für die inneren Querträger 39, 41, welche den gleichen Abstand zueinander als auch jeweils den gleichen Abstand zum benachbart angeordneten Querträger 31 beziehungsweise 33 der Rahmenstruktur 27 aufweisen. Somit ergeben sich in ihren Abmessungen identisch große Teilaufnahmeräume innerhalb des Aufnahmeraums 23, in welche hier identisch große Batteriemodule 25 eingesetzt sind. Ein weiterer Unterschied gegenüber Figur 1 besteht noch darin, dass die äußeren Längsträger 29 nach vorn und nach hinten über den vorderen Querträger 31 beziehungsweise den hinteren Querträger 33 im Aufnahmeraum 23 hinausragen, beispielsweise um 5 mm, insbesondere um eine Verbindung mit dem Vorderwagen beziehungsweise Heckwagen, das heißt mit dem vorderen beziehungsweise hinteren Bereich des Karosserierohbaus, zur realisieren.

In Figur 2 sind ferner Teile einer Seitenwand 47 des Karosserieaufbaus gezeigt, welche sich entlang der Längsträger 29 erstrecken und üblicherweise an diese angesetzt und daran befestigt sind. Bei einem Ausführungsbeispiel des Personenkraftwagens 1 bildet ein Teil der Seitenwand beziehungsweise ein an der Seitenwand innenseitig, dem jeweiligen Längsträger 29 gegenüberliegend angeordnetes Profilelement einen Teil des jeweiligen Seitenschwellers.

Allen Ausführungsbeispielen ist gemeinsam, dass ein vom Karosserierohbau 3 separates Batteriegehäuse entfällt. Es ist somit kein separates Batteriegehäuse vorgesehen, sondern der Aufnahmeraum 23 für die Batteriemodule 25 wird durch den Karosserierohbau gebildet, wodurch ein hoher Integrationsgrad erreicht wird. Die Längsträger 35, 37 und Querträger 39, 41 im Aufnahmeraum 23 für die Batteriemodule 25 sind daher jeweils ein Bestandteil des Karosserierohbaus. Auch hier sind sie lastpfadoptimiert für Front- und Heckkollisionen beziehungsweise für Seitenkollisionen. Die Batteriemodule 25 werden direkt in diesen im Karosserierohbau 3 ausgebildeten Aufnahmeraum 23 eingesetzt.

Bei beiden Ausführungsformen wird erreicht, dass die Antriebsbatterie 19 beziehungsweise deren das Batteriegehäuse 21 bildenden Träger des Karosserierohbaus 3 lasttragend ist, wobei eine mechanische Belastung der Batteriemodule 25 und Einzelzellen vermieden wird.

Zusammenfassend ist in beiden Ausführungsformen die Leiterrahmenstruktur aus Längsträgern 35, 37 und Querträgern 39, 41 zur Aufnahme der Batteriemodule 25 im Aufnahmeraum 23 sowie den Längsträgern 7 und 13 im Vorbau und im Heckwagen gebildet. Dabei sind die Längsträger 35, 37 und Querträger 39, 41 als Lastpfad beziehungsweise als Teil eines Lastpfades L1 bis L4 vorgesehen, damit die Antriebsbatterie 19 als mittragende Struktur in den Karosserierohbau integriert werden kann.

Die Längsträger 35, 37 und Querträger 39, 41 im Aufnahmeraum 23 sind durchgängig beziehungsweise quasi durchgängig ausgebildet, um eine optimierte Kraftführung und optimierte, seitenversatzfreie Lastpfade zur erreichen. Dabei ist wie anhand von Figur 1 beschrieben, bei Ausbildung einer Fachwerkstruktur, bei welcher alle Längsträger und Querträger quasi in einer Ebene angeordnet sind, natürlich nicht möglich alle Träger durchgängig auszubilden, sondern entweder mindestens einer der Längsträger, dann müssen die daran angrenzenden Querträger entsprechend mehrteilig sein, oder mindestens ein Querträger, dann müssen die daran angrenzenden Längsträger mehrteilig sein. Alternativ ist es denkbar, die Längsträger und/oder die Querträger je einstückig auszubilden, aber jeweils mit einer Aussparung, an welchen die Träger ineinandergesteckt werden. Derartige Verbindungen kennt man aus bei zimmermannsmäßige Holzbalkenverbindungen, insbesondere im Fachwerkbau. Wichtig ist, dass die inneren Längsträger 35, 37 die Querträger 31, 33 der Rahmenstruktur 27 miteinander verbinden und die Querträger 39, 41 die äußeren Längsträger 29 der Rahmenstruktur 29. Insbesondere werden 90°-Umlenkungen des Lastpfads vermieden, was in der Regel zu schweren Knotenpunkten im Karosserierohbau führt. Insbesondere ist die Fortführung der Längsträgerstruktur aus dem Vorderwagen in der Antriebsbatterie 19 vorgesehen, über die Längsträger 35, 37 im Aufnahmeraum 23. Die Batteriemodule 25 werden zwischen den Längsträgern 35, 37 und Querträgern 39, 41 im Aufnahmeraum 23 angeordnet und sind somit in den Karosserierohbau integriert, werden aber mechanisch nicht belastet. Der Aufnahmeraum 23 wird durch den Batteriedeckel nach unten abgedichtet und verschlossen.

Die beschriebene Lösung ermöglicht zudem eine Funktionsintegration von Kühlung und/oder Medienführung in den Batteriedeckel, welcher hierzu insbesondere in einer Wabensandwichstruktur ausgeführt ist. In einer möglichen Ausführungsform ist somit diese Funktionsintegration vorgesehen.

Alternativ oder zusätzlich ermöglicht die beschriebene Lösung beispielsweise auch eine Integration von Sensoren zur Messung mechanischer Spannungen, beispielsweise DMS (Dehnungsmessstreifen), und/oder Temperatursensoren und/oder Gassensoren, insbesondere zur Detektion aus den Einzelzellen der Antriebsbatterie 19 entweichender Gase, zum Beispiel im Fall eines so genannten Thermal Runaway ("thermisches Durchgehen" einer oder mehrerer Batteriezellen), in die Längsträger 35, 37 und/oder Querträger 39, 41 im Aufnahmeraum 23. Dadurch wird ein so genanntes Health-Monitoring, das heißt insbesondere eine Zustandsüberwachung, der Antriebsbatterie 19 ermöglicht. Zum Beispiel kann dadurch ermittelt werden, ob die Einzelzellen bei einer Kollision des Personenkraftwagens 1 in unzulässiger Weise deformiert wurden. Eine Energieversorgung der Sensoren kann beispielsweise über Energy Harvesting erfolgen, zum Beispiel durch eine Energieabsorption von Schwingungen und deren Umwandlung in elektrische Energie. In einer möglichen Ausführungsform ist daher vorgesehen, dass einer oder mehrere Sensoren zur Messung mechanischer Spannungen, beispielsweise DMS, und/oder einer oder mehrere Temperatursensoren und/oder einer oder mehrere Gassensoren jeweils in mindestens einen der Längsträger 35, 37 oder mehrere oder alle Längsträger 35, 37 und/oder in mindestens einen der Querträger 39, 41 oder mehrere oder alle Querträger 39, 41 im Aufnahmeraum 23 für die Batteriemodule 25 integriert sind.

## Patentansprüche

1. Karosserierohbau (3) eines Personenkraftwagens (1), mit einer durch in Kraftwagenlängsrichtung voneinander beabstandete Querträger (31, 33) des Karosserierohbaus (3) und durch in Kraftwagenquerrichtung voneinander beabstandete Längsträger (29) des Karosserierohbaus (3) gebildete, umlaufend geschlossene Rahmenstruktur (27), durch welche ein Aufnahmeraum (23) zum Aufnehmen einer Batteriemodule (25) aufweisenden Antriebsbatterie (19) begrenzt ist, und mit sich in Kraftwagenlängsrichtung an die Rahmenstruktur (27) anschließenden Längsträger (7, 13), wobei im Aufnahmeraum (23) für die Batteriemodule (25) mehrere Längsträger (35, 37) und mehrere Querträger (39, 41) angeordnet sind, wobei die Längsträger (35, 37) die Querträger (31, 33) des Karosserierohbaus (3) und die Querträger (39, 41) die Längsträger (29) des Karosserierohbaus (3) miteinander verbinden, und wobei die - in Kraftwagenlängsrichtung (x-Richtung) gesehen - sich an die Rahmenstruktur (27) anschließenden Längsträger (7, 13) in ihrem Anbindungsbereich an den jeweiligen Querträger (31, 33) der Rahmenstruktur (27) jeweils zumindest eine Teilüberdeckung mit dem korrespondierenden, innerhalb des Aufnahmeraums (23) angeordneten Längsträger (35, 37) aufweisen, derart, dass bei einem kollisionsbedingten Krafteintrag in zumindest einen der Längsträger (7,13) sich ein in Kraftwagenquerrichtung versatzfreier Lastpfad (L1, L2) zwischen dem Längsträger (7, 13) und dem direkt dahinter im Aufnahmeraum (23) angeordneten Längsträger (35, 37) ausbildet,
**dadurch gekennzeichnet, dass**
dass Längsträger (35, 37) der Rahmenstruktur (27) und die jeweiligen, quasi in Verlängerung anschließenden Längsträger (7) der Vorbaustruktur (5) und/oder die Längsträger (13) der Heckwagenstruktur (11) mittels jeweils eines den jeweiligen Querträger (31, 33) oberhalb überbrückenden Verbindungselements (45) direkt miteinander verbunden sind.

2. Karosserierohbau nach Anspruch 1,
**dadurch gekennzeichnet, dass**
die Längsträger (35, 37) im Aufnahmeraum (23) für die Batteriemodule (25) an Längsträger (7) zumindest in einem vorderen Bereich des Karosserierohbaus und/oder an Längsträger (13) in einem hinteren Bereich des Karosserierohbaus anschließend angeordnet sind.

3. Karosserierohbau nach Anspruch 1,
**dadurch gekennzeichnet, dass**
zumindest einer Längsträger (35, 37) und/oder einer der Querträger(39, 41) im Aufnahmeraum (23) aus mehreren Teilelementen (43a bis 43b) besteht, wobei die Gesamtlänge dieser Teilelemente (43a bis 43b) kleiner ist als der Abstand zwischen den vorderen und hinteren Querträgern (31, 33) beziehungsweise den äußeren Längsträgern (29) der Rahmenstruktur (27).

## Claims

1. Body shell (3) of a passenger car (1), comprising a peripherally closed frame structure (27) formed by cross members (31, 33) of the body shell (3) which are spaced apart from one another in a longitudinal direction of the car, and by longitudinal members (29) of the body shell (3) which are spaced apart from one another in a transverse direction of the car, which frame structure delimits a receiving space (23) for receiving a drive battery (19) having battery modules (25), and comprising longitudinal members (7, 13) adjoining the frame structure (27) in the longitudinal direction of the car, wherein a plurality of longitudinal members (35, 37) and a plurality of cross members (39, 41) are arranged in the receiving space (23) for the battery modules (25), wherein the longitudinal members (35, 37) connect the cross members (31, 33) of the body shell (3) to one another and the cross members (39, 41) connect the longitudinal members (29) of the body shell (3) to one another, and wherein the longitudinal members (7, 13) which, viewed in the longitudinal direction (x-direction) of the car, adjoin the frame structure (27) each have, in the connecting region thereof to the relevant cross member (31, 33) of the frame structure (27), at least a partial overlap with the corresponding longitudinal member (35, 37) arranged within the receiving space (23), such that, in the event of a collision-induced application of force to at least one of the longitudinal members (7, 13), a load path (L1, L2) which is free of offsets in the transverse direction of the car is formed between the longitudinal member (7, 13) and the longitudinal member (35, 37) arranged directly therebehind in the receiving space (23),
**characterized in that**
longitudinal members (35, 37) of the frame structure (27) and the respective longitudinal members (7) of the front structure (5), which adjoin as a quasi-extension, and/or the longitudinal members (13) of the rear vehicle structure (11) are directly connected to one another in each case by means of a connecting element (45) which bridges above the relevant cross member (31, 33).

2. Body shell according to claim 1,
**characterized in that**
the longitudinal members (35, 37) in the receiving space (23) for the battery modules (25) are arranged adjoining longitudinal members (7) at least in a front region of the body shell and/or adjoining longitudinal members (13) in a rear region of the body shell.

3. Body shell according to claim 1,
**characterized in that**
at least one longitudinal member (35, 37) and/or one of the cross members (39, 41) in the receiving space (23) consists of a plurality of portions (43a to 43b), wherein the total length of these portions (43a to 43b) is less than the distance between the front and rear cross members (31, 33) or the outer longitudinal members (29) of the frame structure (27).

## Revendications

1. Carrosserie brute (3) d'une voiture de tourisme (1), comportant une structure de cadre (27) fermée de manière circonférentielle, formée par des barres transversales (31, 33) de la carrosserie brute (3) espacées les unes des autres dans le sens longitudinal de la voiture et par des longerons (29) de la carrosserie brute (3) espacés les uns des autres dans le sens transversal de la voiture, structure de cadre par laquelle un espace de réception (23) permettant la réception d'une batterie d'entraînement (19) présentant des modules de batterie (25) est délimité, et comportant des longerons (7, 13) rejoignant la structure de cadre (27) dans le sens longitudinal de la voiture, dans laquelle plusieurs longerons (35, 37) et plusieurs barres transversales (39, 41) sont disposés dans l'espace de réception (23) pour les modules de batterie (25), dans laquelle les longerons (35, 37) relient entre elles les barres transversales (31, 33) de la carrosserie brute (3) et les barres transversales (39, 41) relient entre eux les longerons (29) de la carrosserie brute (3), et dans laquelle les longerons (7, 13) rejoignant la structure de cadre (27), vus dans le sens longitudinal de la voiture (direction x), présentent respectivement, dans leur zone de raccordement aux barres transversales (31, 33) respectives de la structure de cadre (27), au moins un chevauchement partiel avec le longeron (35, 37) correspondant disposé à l'intérieur de l'espace de réception (23), de telle sorte que, lors d'une application de force due à une collision sur au moins l'un des longerons (7, 13), un chemin de charge (L1, L2) sans décalage dans le sens transversal de la voiture est formé entre le longeron (7, 13) et le longeron (35, 37) disposé directement derrière celuici dans l'espace de réception (23),
**caractérisée en ce que**
les longerons (35, 37) de la structure de cadre (27) et les longerons (7) respectifs de la structure d'avant-corps (5) et rejoignant pour ainsi dire le prolongement de ceux-ci et/ou les longerons (13) de la structure de caisse arrière (11) sont directement reliés entre eux au moyen de respectivement un élément de liaison (45) qui enjambe la barre transversale (31, 33) respective.

2. Carrosserie brute selon la revendication 1,
**caractérisée en ce que**
les longerons (35, 37) dans l'espace de réception (23) pour les modules de batterie (25) rejoignent des longerons (7) au moins dans une zone avant de la carrosserie brute et/ou des longerons (13) dans une zone arrière de la carrosserie brute.

3. Carrosserie brute selon la revendication 1,
**caractérisée en ce que**
au moins un longeron (35, 37) et/ou l'une des barres transversales (39, 41) dans l'espace de réception (23) sont constitués de plusieurs éléments partiels (43a à 43b), dans laquelle la longueur totale desdits éléments partiels (43a à 43b) est inférieure à la distance entre les barres transversales (31, 33) avant et arrière ou entre les longerons (29) extérieurs de la structure de cadre (27).
